# EUROPEAN PATENT APPLICATION

(11) **EP 4 699 867 A1**
(43) Date of publication of application: **25.02.2026**
(21) Application number: 24792432.7
(22) Date of filing: 22.03.2024
(51) Int. Cl.: B60R 5/02, B60J 10/00, B62D 25/10

(54) **FRONT TRUNK**

(30) Priority: 18.04.2023 GB 202305652
(71) Applicant: Nissan Motor Co., Ltd., Kanagawa 221-0023 (JP)
(72) Inventor: BARRON, Peter, Atsugi-shi, Kanagawa 243-0123 (JP)
(74) Representative: Global IP Europe Patentanwaltskanzlei
(86) International application number: PCT/JP2024/011257
(87) International publication number: WO 2024/219156

(57) **Abstract**

A front trunk (6) includes a trunk lid (12) movable between an open position and a closed position. The trunk lid (12) is arranged between an upper sealing element (14) and a lower sealing element (18).

## Description

### TECHNICAL FIELD

The present invention relates to a front trunk.

### BACKGROUND ART

As electric motors used in electric vehicles are typically more compact than equivalent internal combustion engines (ICEs), battery electric vehicles (BEVs) having similar layouts to ICE vehicles often have a trunk available in front of the passenger compartment. BEVs which only have rear mounted motors will have even larger trunks in the front of the vehicle. A front trunk is suitable for storing a variety of items such as luggage or charging cables. The front trunk is also referred to as a frunk as a combined word of front and trunk. Typically, the front trunk is accessed by opening a bonnet or a front lid of the vehicle. Items are taken in and out through an upper opening of the front trunk. In some embodiments, the front trunk may be closed by the bonnet. In other embodiments, the front trunk is closed by a trunk lid provided separately from the bonnet. The trunk lid can be attached to a perimeter of the upper opening of the front trunk through a hinge.

### SUMMARY OF INVENTION

### TECHNICAL PROBLEM

Due to their location beneath the bonnet, front trunks are liable to collect water, snow, dirt, and other debris. It is possible, for example, to provide a seal around the perimeter of an open front trunk, or to provide a seal which presses down on the closed trunk lid, thereby minimizing the amount of dirt and debris entering front trunks. Such attempts will only be partially successful, similar to ICE vehicles in which the bonnets are sealed around the perimeter. However, these attempts are insufficient to protect valuables contained within the front trunk when the bonnet and the front trunk are opened infrequently.

It is an object of the present invention to provide a front trunk with enhanced sealing performance.

### TECHNICAL SOLUTION

A front trunk according to an aspect of the invention includes a trunk lid moveable between an open position and a closed position. The trunk lid is arranged between an upper sealing element and a lower sealing element.

### ADVANTAGEOUS EFFECTS

According to the front trunk described above, the sealing performance of the front trunk can be enhanced.

### BRIEF DESCRIPTION OF DRAWINGS

[FIG. 1] FIG. 1 is a perspective view of a vehicle equipped with a front trunk according to an embodiment.
[FIG. 2A] FIG. 2A is a perspective view illustrating a bonnet and the front trunk of the vehicle in FIG. 1.
[FIG. 2B] FIG. 2B is a perspective view corresponding to FIG. 2A illustrating a modification of an upper sealing element of the front trunk.
[FIG. 3] FIG. 3 is a cross-sectional view illustrating a closed bonnet and a front trunk.
[FIG. 4] FIG. 4 is a perspective view illustrating an open bonnet and a front trunk.
[FIG. 5] FIG. 5 a cross-sectional view illustrating an open bonnet and a front trunk.
[FIG. 6] FIG. 6 is an enlarged cross-sectional view illustrating a modification of the front trunk.
[FIG. 7] FIG. 7 is a block diagram of a front trunk including a heater and a control unit of the heater.

### DESCRIPTION OF EMBODIMENTS

A front trunk according to an embodiment will be described below with reference to the drawings. In the description, the terms such as top, bottom, left, right, front, and rear are used with reference to a vehicle. FR and RR in the drawings indicate front and rear in a vehicle longitudinal direction, respectively, LH and RH indicate left and right in a vehicle width direction, respectively, and UP and DN indicate upward and downward, respectively. In the following description, left and right in the vehicle width direction, and front and rear in the vehicle longitudinal direction, are simply referred to as "left", "right", "front", "front side", "rear", and "rear side". In the following description, configurations having the same functions as those already described are denoted by the same reference numerals, and description thereof will be omitted.

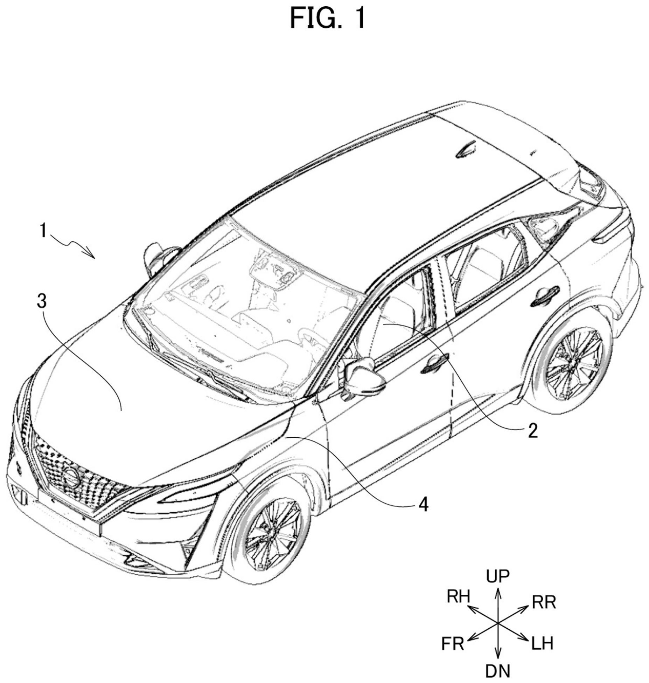

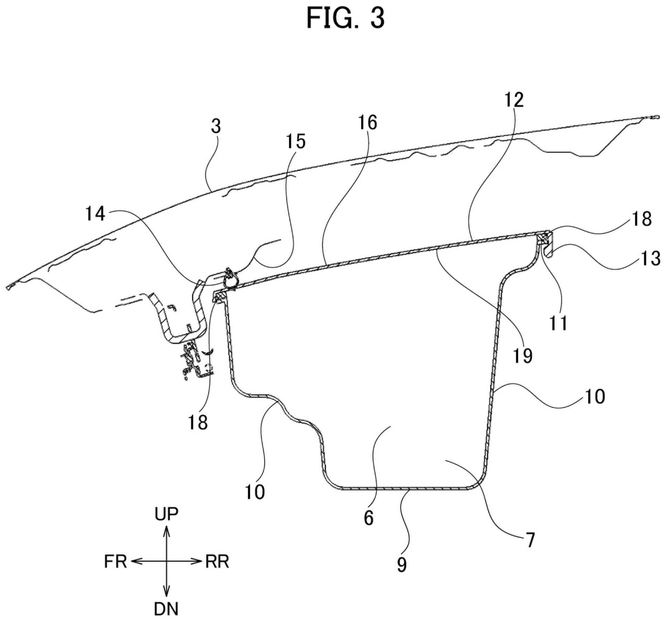

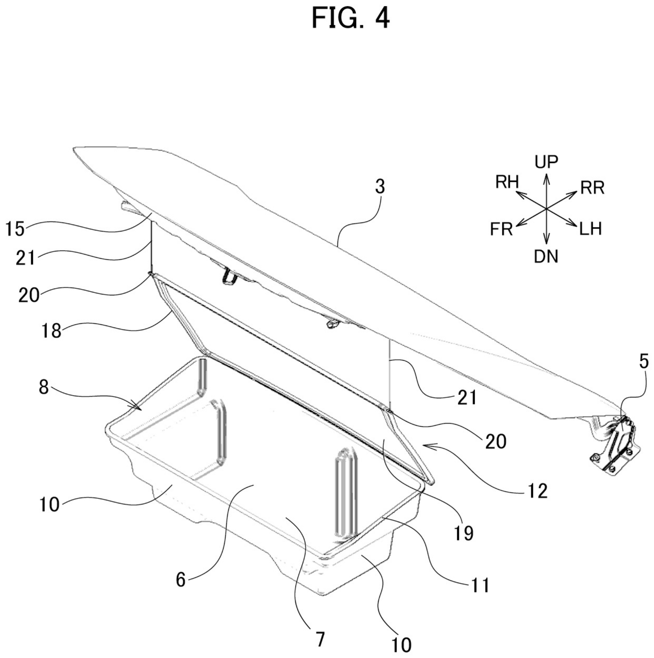

As illustrated in Figs. 1 to 3, a vehicle 1 includes a passenger compartment 2 and a bonnet 3. The bonnet 3 is pivotably attached to a front part 4 of the vehicle in the up-and-down direction via a pair of bonnet hinges 5. The bonnet hinges 5 enable the bonnet 3 to be moved between an open position (see Fig. 4) and a closed position (Fig. 3).

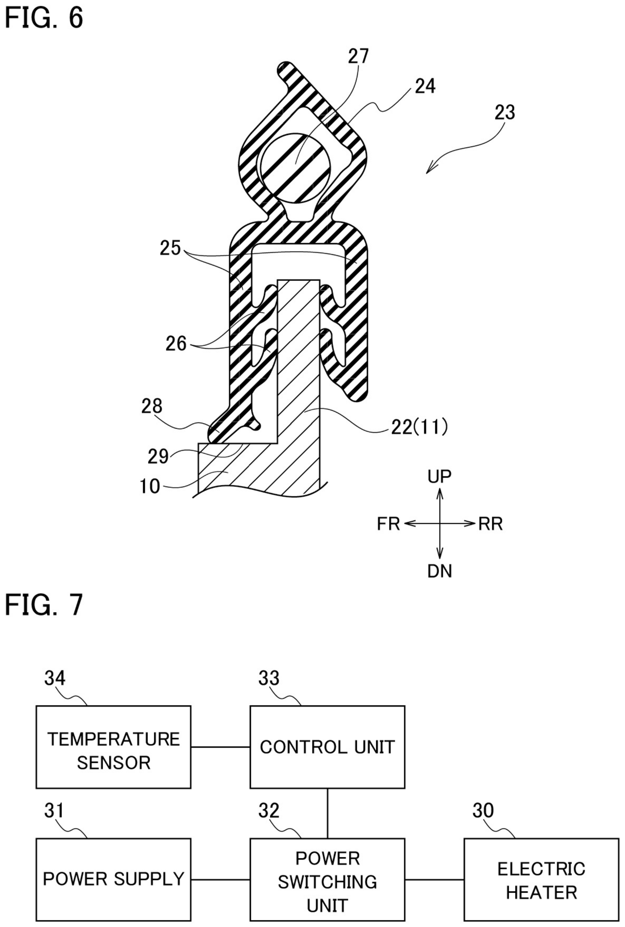

A front trunk 6 is provided in front of the passenger compartment 2 of the vehicle 1 and beneath the bonnet 3. The front trunk 6 includes a basin 7 including a substantially rectangular upper opening 8 (see Fig. 4). The basin 7 includes a substantially rectangular base 9 and four side walls 10. In the present embodiment, a front side wall 10 has an ergonomically stepped shape to allow easy attachment of the front trunk 6 surrounded by other components (not illustrated). A rim 11 defines the upper opening 8, and includes upper edges of the four side walls 10. As illustrated in Figs. 3 to 5, the rim 11 includes a horizontal flange. As described below, the rim 11 in a modification in Fig. 6 includes a vertical flange 22.

The front trunk 6 includes a trunk lid 12, which is pivotably attached to a rear part of the rim 11 including an upper edge of a rear side wall 10 by a lid hinge 13 in the up-and-down direction. The trunk lid 12 has substantially the same rectangular shape as the upper opening 8. When the trunk lid 12 is in a closed position, it covers the upper opening 8 from above, and closes the upper opening 8.

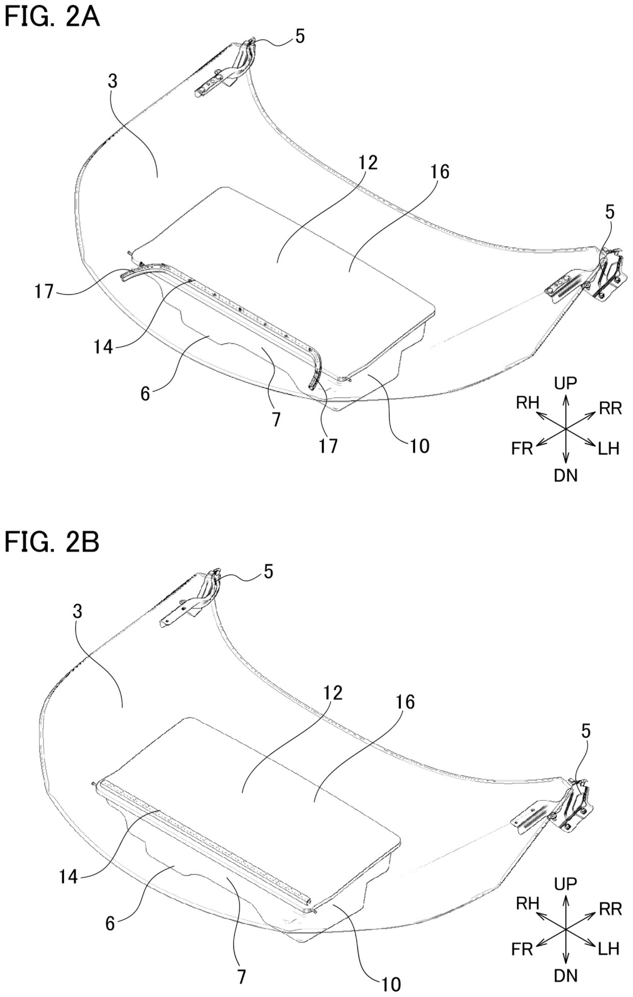

As illustrated in Fig. 2A (embodiment) and Fig. 2B (modification of the embodiment), an upper sealing element 14 is provided between a lower surface 15 of the bonnet 3 and an upper surface 16 of the trunk lid 12. In Figs. 2A and 2B, the bonnet 3 is illustrated in a transparent view. The upper sealing element 14 is arranged at a front part of the trunk lid 12, and extends as a continuous strip across a substantially entire length of a front end of the upper surface 16 of the trunk lid 12. Furthermore, the upper sealing element 14 extends across a substantial part of the front edge of the lower surface 15 of the closed bonnet 3. When the bonnet 3 and the trunk lid 12 are both in a closed position, the upper sealing element 14 is compressed between the lower surface 15 of the bonnet 3 and the upper surface 16 of the trunk lid 12, sealing the front trunk 6 by the trunk lid 12 to prevent the ingress of dirt and debris into the front trunk 6. The upper sealing element 14 in the present embodiment has a uniform cross section. However, it should be noted that the cross section of the upper sealing element 14 may vary in a longitudinal direction to match the contours of the lower surface 15 of the bonnet 3 and/or the upper surface 16 of the trunk lid 12.

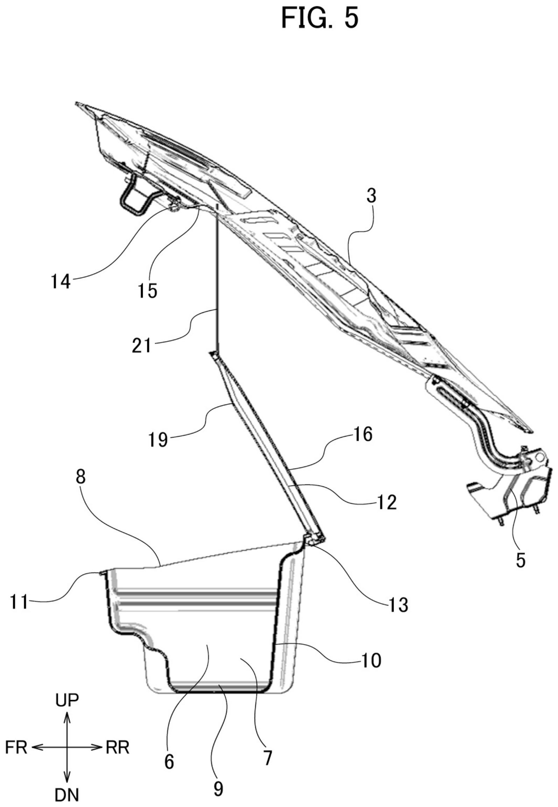

Fig. 2A illustrates a substantially straight upper sealing element 14 with a pair of forwardly projecting portions 17 located at both ends of the upper sealing element 14. The pair of forwardly projecting portions 17 extend to merge with other seals on the vehicle 1 (not illustrated), thus allowing an entire perimeter of the bonnet 3 to be sealed. However, in a modification of the upper sealing element 14 as illustrated in Fig 2B, the upper sealing element 14 extends in a straight manner and does not include the pair of forwardly projecting portions 17. As illustrated in Figs. 3 and 5, the upper sealing element 14 is attached to the lower surface 15 of the bonnet 3. However, the upper sealing element 14 may be attached to the upper surface 16 of the trunk lid 12.

A lower sealing element 18 is provided between a lower surface 19 of the trunk lid 12 and the rim 11. In the present embodiment, the lower sealing element 18 is attached to the lower surface 19 of the trunk lid 12; but the lower sealing element 18 may be attached to the rim 11 (see Fig. 6, for example) In the present embodiment, the lower sealing element 18 is a rubber strip with a uniform cross section. However, the lower sealing element 18 need not be a rubber strip, and may be formed as another type of seal, such as a foam seal, a bulb seal, or a welt seal. When the trunk lid 12 is in a closed position, the lower sealing element 18 is compressed between the lower surface 19 of the trunk lid 12 and the rim 11 to seal the front trunk 6 by the trunk lid 12. This minimizes ingress of dirt and debris into the front trunk 6. Furthermore, the perimeter of the trunk lid 12 is pressed against the lower sealing element 18, thereby minimizing "drumming" effects occurring when the vehicle is in motion.

When both the bonnet 3 and the trunk lid 12 are in closed positions, a middle portion of the upper sealing element 14, and the lower sealing element 18, are aligned with the trunk lid 12 interposed therebetween. The upper sealing element 14 is located substantially vertically above the lower sealing element 18, and in parallel with the lower sealing element 18 extending along the front side wall 10. The sealing elements 14 and 18 cooperate to seal the front trunk 6 with the trunk lid 12 by exerting a sealing pressure on both the upper surface 16 and the lower surface 19 of the trunk lid 12, and effectively maintain the trunk lid 12 in a closed position.

In a modification of Fig. 6, the rim 11 of the front trunk 6 is a flange 22 projecting substantially vertically. A lower sealing element 23 is configured to be attached to the flange 22. The lower sealing element 23 includes a head 24 connected to a pair of jaw elements 25, and one or more holding ribs 26 projecting inwardly from each jaw element 25. When the lower sealing element 23 is attached to the flange 22, the holding ribs 26 deform and adhere to the flange 22 to produce a sealing effect. The head 24 is a bulb seal formed from a resilient material and having a hollow cross section. The jaw elements 25 fit over the vertical flange 22 such that the holding ribs 26 grip the vertical flange 22 to secure the lower sealing element 23 in a predetermined position. An outer jaw element 25 includes a lip 28 for contacting another surface 29 of the front trunk 6. The lip 28 surrounds the front trunk 6 to produce a sealing effect. The lip 28 may be provided only on an inner jaw element 25, or on both the inner and outer jaw elements 25.

The lower sealing element 23 is a strip having a cross section illustrated in Fig. 6. At a joint position of the lower sealing element 23, the connecting member 27 is inserted into the head 24 having a hollow closed cross section, and the ends are connected to each other. When the trunk lid 12 is in a closed position, the lower surface 19 of the trunk lid 12 compresses the head 24 to be deformed. With this compression, the vertical height of the head 24 decreases, but the horizontal width of the head 24 increases. Deformation of the head 24 provides a seal between the entire perimeter of the flange 22 and the lower surface 19 of the trunk lid 12. When both the bonnet 3 and the trunk lid 12 are in a closed position, the upper sealing element 14 and the lower sealing element 23 are aligned with the trunk lid 12 interposed therebetween. That is, the trunk lid 12 is held by the upper sealing element 14 and the lower sealing element 23 arranged at positions facing each other in a thickness direction of the trunk lid 12.

As illustrated in Figs. 4 and 5, the trunk lid 12 includes a pair of projections 20 located at front ends of opposite side edges of the trunk lid 12. The projections 20 extend laterally from the trunk lid 12 to facilitate attachment of a pair of flexible cord members 21. In the present embodiments, the cord members 21 are detachably attached to the projections 20. However, the cord members 21 may be fixedly attached to the projections 20. In Figs. 2A, 2B, and 3, the cord members 21 is not illustrated.

When the bonnet 3 and trunk lid 12 are in open positions, the flexible cord members 21 extend between the projections 20 and the lower surface 15 of the bonnet 3. The flexible cord members 21 are detachably (or alternatively fixedly) attached to a suitable position of the lower surface 15. The flexible cord members 21 pull up the trunk lid 12 to an open position as the bonnet 3 is moved from a closed position to an open position. The flexible cord members 21 hold the trunk lid 12 in an open position while the bonnet is in an open position. Thus, it is not required for a user to open the trunk lid 12 and to hold it at an open position. As the bonnet 3 is moved from an open position to a closed position, the holding of the trunk lid 12 by the cord members 21 is released, and the trunk lid 12 is moved to the closed position by its own weight.

Operation and effect of the front trunk according to the embodiment above will be described below.

(1) The front trunk 6 includes the trunk lid 12 movable between an open position and a closed position. The trunk lid 12 is arranged between an upper sealing element and a lower sealing element when in use (in particular, when closed).

The trunk lid 12 is arranged between the upper sealing element 14 and the lower sealing element 18, so that the two sealing elements 14 and 18 can cooperate to maintain the trunk lid 12 in the closed position. Therefore, the ingress of dirt and dust into the front trunk 6 can be minimized. Moreover, the trunk lid 12 is arranged between the two sealing elements 14 and 18, so that vibration of the trunk lid 12 is inhibited. Therefore, the user's satisfaction can be improved by reducing drumming which can be a noise source while the vehicle is traveling.
(2) The front trunk 6 is usually provided in front of the passenger compartment 2. The front trunk 6 is provided when in use beneath the bonnet 3 which is movable between an open position and a closed position. The front trunk 6 is protected from dirt and debris by the bonnet 3 in addition to the trunk lid 12. The bonnet 3 rotatably attached to the front part of the vehicle 1 in the up-and-down direction. The bonnet 3 may be opened and closed by a powered mechanism including, but not limited to, gas struts and/or electric struts, for example.
(3) The front trunk 6 includes the basin 7 including the upper opening 8, the base 9, and one or more side walls 10. The one or more side walls 10 include the left side wall 10, the right side wall 10, the front side wall 10, and/or the rear side wall 10 of the front trunk 6, which define the surrounding of the front trunk 6. The upper opening 8 may be defined by the rim 11. The front trunk 6 is configured to include the basin 7, only closing the trunk lid 12 minimizes ingress of dirt and debris into the front trunk 6.
(4) The rim 11 includes an upper edge of each side wall 10. The rim 11 may include a flange. The rim 11 according to the embodiment includes a horizontal flange, and in a modification of the lower sealing element 23 illustrated in Fig. 6, the rim includes the vertical flange 22. The flange may protrude substantially horizontally, substantially vertically, or in other directions. The flange provides a suitable surface for interacting with the lower sealing element 18. The lower sealing element 18 can be held more stably by formation of the flange.
(5) The trunk lid 12 is rotatably attached to the rim 11. The trunk lid 12 may be pivotally attached to the rear part of the rim 11. The rear part of the rim 11 includes the upper edge of the rear side wall 10 of the basin 7. Therefore, the upper opening 8 of the front trunk 6 can be more securely sealed by the trunk lid 12. Moreover, since the trunk lid 12 is opened and closed in accordance with the opening and closing orientation of the bonnet 3, the front trunk 6 offers improved operability. The trunk lid 12 may include a handle. The handle may project from the upper surface 16 of the trunk lid 12. The trunk lid 12 may be provided with at least one catch. The at least one catch may be provided on the lower surface 19 of the trunk lid 12. The at least one catch may be configured to cooperate with a corresponding part on the basin 7.
(6) The upper sealing element **14** is provided between the lower surface 15 of the bonnet 3 and the upper surface 16 of the trunk lid 12. The upper sealing element **14** may be attached to the lower surface 15 of the bonnet 3 or to the upper surface 16 of the trunk lid 12. Since the bonnet 3 presses the upper sealing element 14 downward and the upper sealing element 14 presses the trunk lid 12 against the rim 11, the sealing performance of the front trunk 6 is improved.
(7) The dimension of the upper sealing element 14 is set such that the upper sealing element 14 is compressed between the upper surface 16 of the trunk lid 12 and the lower surface 15 of the bonnet 3 when the bonnet 3 and the trunk lid 12 are in their closed positions. Therefore, the sealing performance of the front trunk 6 is more reliably improved. In this case, the upper sealing element 14 can substitute for a catch. Depending on the location of the catch, the release operation may be complicated and access to the front trunk 6 may be difficult. Omission of the catch also leads to a reduction in production costs.
(8) The upper sealing element **14** may be located towards the front trunk 6 when the bonnet 3 and the trunk lid 12 are in their closed positions. Furthermore, the upper sealing element **14** may extend across the entire length or substantially across the entire length of the front edge of the upper surface 16 of the trunk lid 12. The upper sealing element **14** may extend across a substantial part of the front end of the lower surface 15 of the bonnet 3. The "substantial part of the front end" is 50% or more, preferably 70% or more of the entire length of the front end. According to this configuration, the sealing performance at the front edge of the trunk lid 12 can be enhanced.
(9) The upper sealing element 14 may include protrusions protruding forward and/or backward. The upper sealing element 14 may abut against other seals of the vehicle 1, such as snow seals or aerodynamic seals under the bonnet 3, or extended to merge with the other sealing elements. The upper sealing element 14 can seal the entire circumference of the bonnet 3. In addition, the upper sealing element 14 can prevent the ingress of water, snow, dirt, and other debris into the front trunk 6 and the surrounding area.

The upper sealing element 14 may be provided as a continuous strip or a noncontinuous strip. The upper sealing element 14 may be of uniform cross section along the entire length, or of non-uniform cross section along the entire length or some of the length. The cross-sectional shape of the upper sealing element 14 may be formed to match the shape of the lower surface 15 of the bonnet 3 and/or the upper surface 16 of the trunk lid 12. Thus, the sealing effect of the upper sealing element 14 can be improved. The upper sealing element 14 may be formed of any material suitable for sealing, for example, an elastomer material including rubber, or foams with or without backing strips.
(10) The upper sealing element 14 may be a snow seal (which may include a bulb seal), a welt seal, or a compressible foam seal, and may have a substantially rectangular cross section. The upper sealing element 14 may be an aerodynamic seal and/or a wind noise reducing seal. A rectangular cross section facilitates the manufacture of the upper sealing element 14 and provides a good sealing effect.
(11) The lower sealing element 18 is provided between the lower surface 19 of the trunk lid 12 and the rim 11. The lower sealing element 18 may be attached to the lower surface 19 of the trunk lid 12 or to the rim 11. Thus, the sealing effect between the trunk lid 12 and the basin 7 by the lower sealing element 18 is further improved. The dimension of the lower sealing element 18 is set such that it is compressed between the lower surface 19 of the trunk lid 12 and the rim 11 when the trunk lid 12 is in the closed position. Therefore, the sealing performance of the front trunk 6 is more reliably improved.
(12) The lower sealing element 18 may extend around an entire or substantially entire perimeter of the rim 11. The lower sealing element 18 may extend along a front rim 11 or a rear rim 11. The lower sealing element 18 may extend along at least one side rim 11. The lower sealing element 18 may extend along the front rim 11, the rear rim 11, and the at least one side rim 11. With the lower sealing element 18, the sealing performance between the trunk lid 12 and the basin 7 (rim 11) is more reliably improved. In the embodiment above, the lower sealing element 18 extends over the entire perimeter of the rim 11.

The lower sealing element 18 may be provided as a continuous strip or as a noncontinuous strip. The lower sealing element 18 may of uniform cross section along the entire length, or of non-uniform cross section along the entire length or some of the length. The cross section of the lower sealing element 18 may be shaped such that it matches the shape of the lower surface of the trunk lid. Thus, the sealing effect of the lower sealing element 18 can be improved. The lower sealing element 18 may be formed of any material suitable for sealing, for example, an elastomer material including rubber, or foams with or without a backing strip.

(13) The lower sealing element 18 may be a snow seal (which may include a bulb seal), a welt seal, or a compressible foam seal, and may have a substantially rectangular cross-section. The lower sealing element 18 may be an aerodynamic seal and/or a wind noise reducing seal. A rectangular cross section facilitates the manufacture of the lower sealing element 18 and provides a good sealing effect.
(14) The upper sealing element 14 and the lower sealing element 18 may be aligned such that they face each other in the thickness direction of the trunk lid 12 with the closed trunk lid 12 interposed therebetween. The upper sealing element 14 and the lower sealing element 18 may be arranged such that the position of the upper sealing element 14 on the upper surface 16 of the trunk lid 12 corresponds to the position of the lower sealing element 18 on the lower surface 19 of the trunk lid 12. The upper sealing element 14 and the lower sealing element 18 cooperate to seal the trunk lid 12 and prevent the ingress of dirt and debris. This arrangement is also effective in reducing the "drumming".
(15) At least one flexible cord member 21 (for example, a lifting cord) is provided between the upper surface 16 of the trunk lid 12 and the lower surface 15 of the bonnet 3. The cord member 21 connects the bonnet 3 and the trunk lid 12 so that the opening and closing of the trunk lid 12 can follow the movement between the open position and closed position of the bonnet 3. The user can easily access the front trunk 6 since the trunk lid 12 opens along with the bonnet 3. Such a configuration is easier to use than a connection by way of a rod. For example, in another example in which a rod is incorporated between a bonnet and a trunk lid so that the lid is closed in accordance with the closing operation of the bonnet, the rod may be broken if used improperly. In such a case, the trunk lid may be closed at an unsuitable timing and stored items may be damaged. According to the embodiment above, such a problem can be resolved.
(16) The cord member 21 may be fixed to at least one of the upper surface 16 of the trunk lid 12 and the lower surface 15 of the bonnet 3. Alternatively, the cord member 21 may be detachably attached to at least one of the upper surface 16 of the trunk lid 12 and the lower surface 15 of the bonnet 3. For example, one end of the cord member 21 may be detachably attached to the upper surface 16 of the trunk lid 12, and the other end of the cord member 21 may be fixed to the lower surface 15 of the bonnet 3. Alternatively, one end of the cord member 21 may be fixed to the upper surface 16 of the trunk lid 12, and the other end may be detachably attached to the lower surface 15 of the bonnet 3. At least one of the two ends of the cord member 21 detachably attached to the trunk lid 12 or the bonnet 3 allows the trunk lid 12 to be opened and closed independently of the opening and closing of the bonnet 3. As a result, the trunk lid 12 can remain in the closed position when the bonnet 3 is opened. This configuration is beneficial in some circumstances, for example, when the bonnet 3 needs to be opened without accessing the front trunk 6.
(17) The cord members 21 may include a first cord member 21 and a second cord member 21. In the embodiment above, the first cord member 21 is located toward one side edge of the trunk lid 12, and the second cord member 21 is located toward the other side edge of the trunk lid 12. The cord members 21 are provided on both sides of the trunk lid 12, so that the trunk lid 12 can be stably opened and closed by the pair of cord members 21. In other embodiments, the cord members 21 may be located toward the center of the trunk lid 12.

The length of the cord members 21 is configured such that the trunk lid 12 is held in an open position when the bonnet 3 is fully opened. At least one flexible cord member 21 has, for example, a length of at least 225 mm. Alternatively, the cord members 21 may have a length of at least 250 mm, which is necessary to obtain an appropriate opening height of the trunk lid 12. The cord members 21 allow the trunk lid 12 to move automatically between the open and closed positions.

(18) The lower sealing element 18 may include a heater 30. The heater 30 minimizes the risk of the trunk lid 12 freezing and sticking in the closed position in a cold environment. This configuration is particularly beneficial in an electric vehicle in which the front part 4 of the vehicle 1 is easily cooled because a thawing effect from an internal combustion engine cannot be obtained. The heater 30 may be an electric heater 30. An electric heater element of the electric heater 30 may be provided inside the lower sealing element 18. In this case, the electric heater element may be integrally molded inside the lower sealing element 18. Alternatively, the electric heater element may be arranged in a passage provided inside the lower sealing element 18.

The electric heater element may be provided on the surface of the lower sealing element 18. In this case, the electric heater element may be mounted directly on the surface of the lower sealing element 18 or in a housing portion formed on the surface. By mounting the electric heater element in the housing portion, the electric heater element can be prevented from protruding from the surface of the lower sealing element. Thus, the possibility of accidental damage to the electric heater can be reduced, and the electric heater element can be prevented from being accidentally removed. When the electric heater element is directly mounted on the surface of the lower sealing element 18, the electric heater element may be fixed in a predetermined position with an adhesive. The electric heater element may be fixed at a predetermined position by other fasteners including brackets, clips, clasp hooks, or the like. The heater element may be fixed to the bonnet 3 or the trunk lid 12.

The electric heater 30 may be supplied with electric power on a continuous basis while the vehicle 1 is turned on. This configuration may be achieved, for example, by simply connecting the electric heater 30 to an electrical system of the vehicle 1. The vehicle 1 may be deemed activated when the ignition switch or starter switch is activated to supply electric power to the vehicle system.

(19) The front trunk 6 may further include a control unit 33 for controlling the electric power supply to the electric heater 30. The control unit 33 may include a microprocessor. The control unit 33 may be configured to vary the amount of electric power supplied to the electric heater 30, or to control whether the electric heater 30 is supplied with electric power. The control unit 33 may be configured to control the electric power supply from the power supply 31 to the electric heater 30 by controlling the operation of a power switching unit 32.

The control unit 33 may be configured to intermittently supply electric power to the electric heater 30 while the vehicle 1 is turned on. The control unit 33 may be configured to supply power to the electric heater 30 for a preset amount of time from activation of the vehicle 1. In this case, the electric heater 30 may melt ice formed on the lower sealing element 18 while vehicle 1 is activated.

The control unit 33 may be configured to supply electric power to the electric heater 30 continuously or for a preset amount of time after a user switch operation. Suitable preset amounts of time may be, for example, 2 minutes, 5 minutes, or 10 minutes. This allows a user to activate the electric heater 30 when the user is aware that ice has formed or suspects that ice may have formed.

(20) The control unit 33 may be configured to vary the electric power supplied to the electric heater 30 in response to a temperature sensor 34. The temperature sensor 34 may be a dedicated temperature sensor 34 attached to, or in the vicinity of, the front trunk 6. The temperature sensor 34 may be attached elsewhere in the vehicle 1. For example, the temperature sensor 34 may be used for an internal combustion engine or motor control unit, or for a vehicle body control unit. For example, the temperature sensor 34 may be an ambient temperature sensor. Many vehicles generally include such sensors to provide data for other systems and functions. Such sensors include, but are not limited to, frost alarm, driver information display, and the like. Using data from such existing temperature sensors for the control unit 33 eliminates the need to install additional sensors in the vehicle. In addition, since ice formation occurs at low outside temperatures, it is possible to effectively predict ice formation even when outside temperatures are detected without directly detecting the temperature of the front trunk 6. The control unit 33 may be configured to perform control when the temperature sensor 34 detects a temperature below a threshold temperature. A suitable threshold temperature is, for example, 5 degrees Celsius.

In such an implementation, the control unit 33 may be configured to supply electric power to the electric heater 30 in response to a temperature below a threshold temperature detected by the temperature sensor 34. The control unit 33 may be configured to provide electric power continuously or intermittently while the detected temperature is below the threshold temperature, or to supply electric power for a preset time after the detected temperature is below the threshold temperature. Similarly, the control unit 33 may be configured to provide electric power continuously or intermittently for a preset time after activation of a vehicle when a detected temperature is below the threshold temperature when the vehicle is activated.

The control unit 33 may be configured to perform a first control when the detected temperature is below a first threshold temperature, and to perform a second control when the detected temperature is below a second threshold temperature. The second threshold temperature is different from the first threshold temperature. In many embodiments, the second threshold temperature is a temperature lower than the first threshold temperature. A suitable second threshold temperature may be 5 degrees Celsius, and a suitable second threshold temperature is 2 degrees Celsius.

In the second control, electric power may be supplied at a power level higher than the first control, and electric power is supplied for a preset time longer than the first control. In the second control, electric power is supplied intermittently at a duty cycle higher than the first control, and/or electric power is supplied continuously or intermittently. The control unit 33 may be configured to switch off power supply when the ambient temperature rises to, for example, 10 degrees Celsius, while the vehicle is turned on.

The vehicle 1 including the front trunk 6 can obtain the same operation and effect as those described above. The embodiments above and modifications thereof are merely examples described to facilitate understanding of the invention. The technical scope of the invention is not limited to the specific technical matters disclosed in the embodiments above, but also includes various modifications, variations, and alternative techniques which can be easily derived therefrom.

This application claims priority under UK application GB2305652.6, filed on April 18, 2023, the entire contents of which are hereby incorporated by reference.

### REFERENCE SIGNS LIST

1 Vehicle
3 Bonnet
4 Front part (of the vehicle)
6 Front trunk
7 Basin
8 Upper opening
9 Base
10 Side wall
11 Rim
12 Trunk lid
14 Upper sealing element
15 Lower surface (of the bonnet)
16 Upper surface (of the trunk lid)
17 Forwardly projecting portions
18, 23 Lower sealing element
19 Lower surface (of the trunk lid)
21 Cord member
22 Flange
30 Heater
33 Control unit
34 Temperature sensor

## Claims

1. A front trunk comprising a trunk lid moveable between an open position and a closed position, wherein the trunk lid is arranged between an upper sealing element and a lower sealing element.

2. The front trunk according to claim 1, wherein the front trunk is provided when in use beneath a bonnet which is movable between an open position and a closed position.

3. The front trunk according to claim 1 or 2, wherein the front trunk comprises a basin including an upper opening, a base, and one or more side walls.

4. The front trunk according to claim 3, wherein
the upper opening is defined by a rim comprising an upper edge of the one or more side walls, and
the rim comprises a flange.

5. The front trunk according to claim 4, wherein the trunk lid is pivotably attached to the rim.

6. The front trunk according to any one of claims 2 to 5, wherein the upper sealing element is provided between a lower surface of the bonnet, and an upper surface of the trunk lid.

7. The front trunk according to claim 6, wherein the upper sealing element is attached to the lower surface of the bonnet or to the upper surface of the trunk lid.

8. The front trunk according to claim 7, wherein the dimension of the upper sealing element is set such that the upper sealing element is compressed between the lower surface of the bonnet and the upper surface of the trunk lid when the trunk lid and the bonnet are each in the closed position.

9. The front trunk according to any one of claims 6 to 8, wherein the upper sealing element extends across an entire length or substantially across an entire length of a front edge of the upper surface of the trunk lid.

10. The front trunk according to any one of claims 6 to 8, wherein the upper sealing element extends across a substantial part of a front end of the lower surface of the closed bonnet.

11. The front trunk according to claim 9 or claim 10, wherein
the upper sealing element comprises forwardly and/or rearwardly projecting portions, and
the projecting portions extend to abut against other seals or merge with the other seals on the vehicle.

12. The front trunk according to any one of claims 1 to 11, wherein the upper sealing element is a snow seal, a welt seal, or a compressible foam seal, which has a rectangular cross section.

13. The front trunk according to claim 4, claim 5, or any one of claims 6 to 12 when dependent on claim 4, wherein the lower sealing element is provided between a lower surface of the trunk lid and the rim.

14. The front trunk according to claim 13, wherein the lower sealing element is attached to the lower surface of the trunk lid or to the rim.

15. The front trunk according to claim 13 or claim 14, wherein the lower sealing element extends around an entire or substantially entire perimeter of the rim.

16. The front trunk according to any one of claims 1 to 15, wherein the lower sealing element is a snow seal, a welt seal, or a compressible foam seal, which has a rectangular cross section.

17. The front trunk according to any one of claims 1 to 16, wherein the upper sealing element and the lower sealing element are aligned such that a position of the upper sealing element on the upper surface of the trunk lid corresponds to a position of the lower sealing element on the lower surface of the trunk lid.

18. The front trunk according to any one of claims 2 to 17, wherein at least one flexible cord member is provided between the upper surface of the trunk lid and the lower surface of the bonnet.

19. The front trunk according to claim 18, wherein the cord member is fixed to at least one of the upper surface of the trunk lid and the lower surface of the bonnet.

20. The front trunk according to claim 18 or claim 19, wherein the cord member is detachably attached to at least one of the upper surface of the trunk lid and the lower surface of the bonnet.

21. The front trunk according to any one of claims 18 to 20, wherein
the cord member includes a first cord member and a second cord member, and
the first cord member is located toward one side edge of the trunk lid, and the second cord member is located toward the other side edge of the trunk lid.

22. The front trunk according to any one of claims 1 to 21, wherein the lower sealing element comprises a heater.

23. The front trunk according to claim 22, wherein
the heater is an electric heater, and
the front trunk further comprises a control unit configured to vary electric power supplied to the electric heater in response to a temperature sensor.

24. A vehicle comprising the front trunk according to any one of claims 1 to 23.
